# EUROPÄISCHE PATENTSCHRIFT

(11) **EP 0 563 562 B1**
(45) Veröffentlichungstag und Bekanntmachung des Hinweises auf die Patenterteilung: **02.11.1995**
(21) Anmeldenummer: 93102696.7
(22) Anmeldetag: 20.02.1993
(51) Int. Cl.: B64D 9/00, B64C 1/20

(54) **Frachtladesystem**
Cargo loading system
Système de chargement de fret

(30) Priorität: 01.04.1992 DE 4210703
(43) Veröffentlichungstag der Anmeldung: 06.10.1993
(73) Patentinhaber: Daimler-Benz Aerospace Airbus Gesellschaft mit beschränkter Haftung, 21129 Hamburg (DE)
(72) Erfinder: Vogg, Günter, W-2800 Bremen (DE); Wieck, Jürgen, W-2800 Bremen 1 (DE)
(74) Vertreter: Hansmann, Dierk, Dipl.-Ing.

(56) Entgegenhaltungen:
- DE-A- 3 107 745
- FR-A- 2 518 028
- US-A- 3 899 092
- US-A- 5 000 635

## Beschreibung

Die Erfindung betrifft ein Frachtladesystem für Luftfahrzeuge, insbesondere Oberdeck-Frachtladesystem für vom Passagier auf den Frachtbetrieb umrüstbare Verkehrsflugzeuge , mit in Flugzeuglängsrichtung im Flugzeugboden verlaufenden Sitzschienen und mindestens einem daran lösbar befestigten Riegelelement, bei dem wenigstens ein Riegelhaken schwenkbar und längsverschieblich in einem Rahmen gehaltert ist, der über Verriegelungselemente in zwei im Abstand voneinander befindlichen Sitzschienen festlegbar ist.

Ein derartiges Riegelelement ist aus der Druckschrift DE-PS 31 07 745 bekannt geworden. Bei diesem bekannten Frachtladesystem dient das Riegelelement dem Zweck, als sogenannter YZ-Riegel die an ihre jeweilige Stauposition im Frachtraum beförderten Frachtstücke, wie Paletten oder Container, in vertikaler und in lateraler Richtung in dieser Position zu fixieren. Dies geschieht über den Riegelhaken, der über entsprechende Vorsprünge des Frachtstückes greift.

Verkehrsflugzeuge, die mit großen Frachtladetoren im Bereich des Oberdecks ausgerüstet sind, sind in der Lage, auch vergleichsweise sperrige Güter zu befördern. Hierzu gehören beispielsweise vollständige Triebwerke, von denen lediglich ein Teil der Außenverkleidung entfernt wird und die auf speziellen Paletten gelagert sind. Bei Transporten von solch sperrigem Frachtgut ist es besonders wichtig, dieses in das Flugzeuginnere zu bringen, ohne daß das Frachtgut an die Flugzeugzelle stößt und es dadurch zu Beschädigungen der Zelle oder des Frachtgutes kommt.

Insbesondere sind beim Transport von Frachtstücken, die aufgrund ihrer Länge nicht quer durch das Frachtladetor passen, die deshalb zunächst senkrecht zur Flugzeuglängsachse in das Flugzeug hineingerollt werden und die dann, im Bereich des Frachtladetors, um etwa 90 Grad umgelenkt werden, besondere Sicherheitsvorkehrungen erforderlich. Diese sollen verhindern, daß das Frachtgut gegen den dem Frachtladetor gegenüberliegenden Wandbereich der Flugzeugkabine stößt. So ist aus der DE-PS 31 02 146 eine Anordnung zum zwangsweisen Umlenken von Frachtpaletten und Containern bekannt, die aus einem im Bereich des Frachtladetors im Flugzeugboden angeordneten Schwenkzapfen sowie einem mit diesem zusammenwirkenden speziellen Beschlag besteht, der an der umzulenkenden Frachtpalette im Bodenbereich angebracht ist. Beim Einführen des Frachtgutes durch das Frachtladetor soll dieser Beschlag automatisch mit dem Schwenkzapfen in Eingriff gelangen und dadurch den Umlenkvorgang herbeiführen.

Aufgabe der Erfindung ist es, ein Frachtladesystem der eingangs genannten Art weiterzubilden und bei einem nicht ordnungsgemäßen Umlenkvorgang das Frachtgut so abzufangen, daß eine Beschädigung der Struktur des Flugzeuges oder des Frachtgutes weitgehend verhindert wird. Insbesondere soll dabei ein Anprall des Frachtgutes an dem Riegelelement weich bzw. nachgebend auffangbar sein.

Die Erfindung löst diese Aufgabe durch ein Frachtladesystem mit den kennzeichnenden Merkmalen des Patentanspruchs 1.

Vorteilhafte Weiterbildungen, die vor allem eine möglichst vielseitige Verwendbarkeit des erfindungsgemäßen Frachtladesystems zum Ziel haben, sind in den weiteren Ansprüchen angegeben. Das bei dem Frachtladesystem nach der Erfindung vorgesehene Riegelelement wird dabei so an den Sitzschienen in dem dem Frachtladetor gegenüberliegenden Bereich des Kabinenbodens angeordnet, daß die Anschlagfläche des Riegelhakens dem durch das Frachtladetor einrollenden Frachtgut zugewandt ist und somit dessen Bewegung in Richtung der Y-Achse des Flugzeuges begrenzt wird.

Zwar ist aus der US-A-5,000,635 ein Riegelelement bekannt, das ein Frachtstück über Federn verriegelt und damit eine Vorspannung am Frachtstück erzeugt, durch die etwaige Verschiebungen und/oder Deformationen des Ladegutes, die dazu führen könnten, daß die Verriegelung sich löst, kompensiert werden. Dieses bekannte Riegelelement ist jedoch weder für einen Einsatz in dem erfindungsgemäßen Frachtladesystem geeignet noch dazu, den Aufprall eines schlecht gelenkten Frachtstückes aufzufangen.

Neben diesem speziellen Verwendungszweck kann das bei dem erfindungsgemäßen Frachtladesystem vorgesehene Riegelelement aber auch in anderen Bereichen eines Frachtladesystems eingesetzt werden, in denen die Bewegung von Frachtgut gedämpft abgefangen werden soll, statt durch einen abruptem Stoß gegen ein herkömmliches Riegelelement. Durch die Auswahl
entsprechender Federkonstanten für die erfindungsgemäß vorgesehenen Federn kann dabei die Dämpfungscharakteristik der jeweiligen Aufgabenstellung angepaßt werden.

Im folgenden soll die Erfindung anhand eines in der Zeichnung dargestellten Ausführungsbeispieles näher erläutert werden. Es zeigen:
- Fig. 1: eine seitliche Ansicht eines Riegelelementes,
- Fig. 2: einen Teilbereich der Anordnung nach Fig. 1 in abgekoppelter Position **und**
- Fig. 3: einen Draufsicht auf die Anordnung gemäß Fig. 1.

In den Figuren sind gleiche Bauteile mit dem gleichen Bezugszeichen versehen.

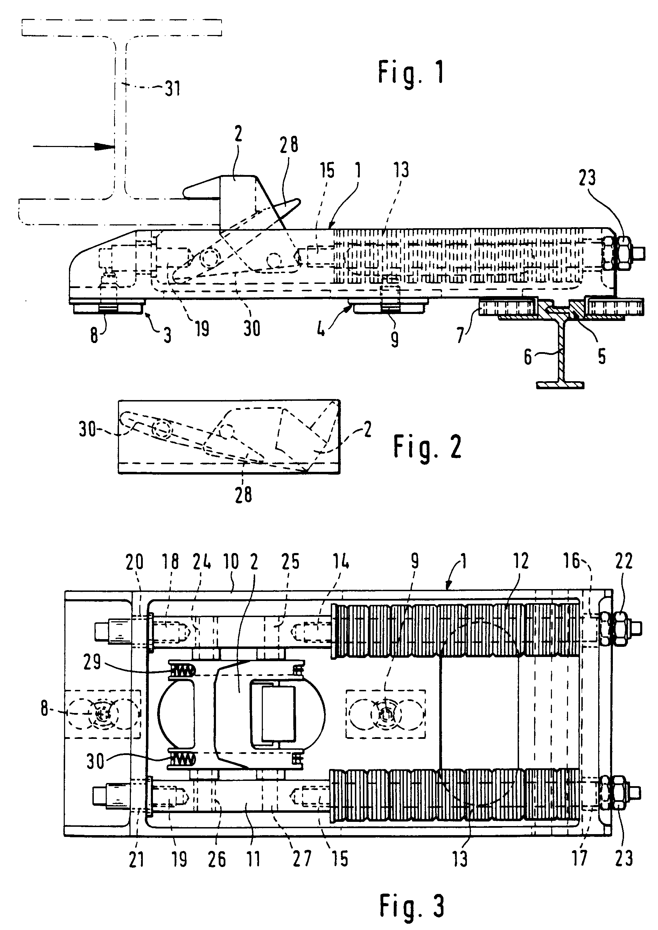

Das in Fig. 1 dargestellte Riegelelement besteht aus einem Rahmen 1, der einen schwenkbar gelagerten Riegelhaken 2 aufnimmt und der mittels entsprechender Elemente 3 bis 5 an Sitzschienen 6 arretierbar ist, die in gleichmäßigen Abständen im Boden 7 in Längsrichtung des Flugzeuges angeordnet sind. Die Verbindung zwischen dem Rahmen 1 und den mit einem Lochraster versehenen Sitzschienen 6 erfolgt auf bekannte Weise über pilzförmige Stollen 8 und 9, deren Größe und Position auf das Lochraster abgestimmt sind.

Im Innern des rechteckigen Rahmens 1 sind, parallel zu den Längswänden des Rahmens 1, zwei Stege 10 und 11 im Abstand voneinander angeordnet, die sich über Druckfedern 12 und 13 an einer der Querwände des Rahmens 1 abstützen. Bei den Druckfedern 12 und 13 handelt es sich entweder um Bündel von Teller- oder von Blattfedern, die über in die Stirnflächen der Stege 10 und 11 eingeschraubte Bolzen 14 und 15 gezogen sind. Die Bolzen 14 und 15 sind in Bohrungen 16 bzw. 17 an der Querwand des Rahmens 1 gleitend gelagert, an der sich auch die Druckfedern 12 und 13 abstützen. Zusammen mit zwei weiteren, in die gegenüberliegenden Stirnflächen der Stege 10 und 11 eingeschraubten Bolzen 18 und 19, die in der gegenüberliegenden Querwand des Rahmens 1 ebenfalls in entsprechenden Bohrungen 20 und 21 gleitend gelagert sind, bilden die Bolzen 14 und 15 eine Linearführung für die Stege 10 und 11. Die Bolzen 14 und 15 stützen sich durch zwei Paare 22 und 23 von Kontermuttern an der Außenfläche des Rahmens 1 ab.

In Querbohrungen 24 bis 27 der Stege 10 und 11 sind sowohl der Riegelhaken 2 als auch eine Rastklinke 28 schwenkbar gelagert. Der Riegelhaken 2 sowie die Rastklinke 28 sind über zwei Zugfedern 29 und 30 miteinander verbunden, wobei diese Zugfedern in der in Fig. 1 dargestellten ausgeschwenkten Position des Riegelhakens 2 gespannt sind und die Rastklinke 28 in ihrer Verriegelungsposition für den Riegelhaken 2 halten. In der in Fig. 2 dargestellten Position sind der Riegelhaken 2 sowie die Rastklinke 28 unter das Niveau der Forderebene abgesenkt, die Zugfedern 29 und 30 sind entlastet.

Das vorstehend beschriebene Riegelelement wird, beispielsweise in dem dem Frachtladetor gegenüberliegenden Teil des Frachtraumbodens 7, so angeordnet, daß der Rahmen 1 mit seiner Längserstreckung senkrecht zur Flugzeuglängsachse bzw. zu den Sitzschienen 6 liegt und der Riegelhaken 2 damit die Position eines Y- bzw. YZ-Riegels einnimmt. Wird dieses Riegelelement um, wie in Fig. 1 dargestellt, durch ein Frachtstück 31, beispielsweise eine mit einem Triebwerk beladene Palette, beaufschlagt, die durch das Frachtladetor in das Flugzeuginnere befördert wird und die, aus welchen Gründen auch immer, nicht bereits um 90° in ihrer Förderrichtung umgelenkt wurde, so fängt der längsverschieblich im Rahmen 1 gehaltene Riegelhaken 2 den Aufprall ab. Seine Ausweichbewegung wird dabei begrenzt durch die Dämpfungswirkung der Druckfedern 12 und 13, die das Frachtstück zum Stehen bringen, ohne daß es zu einem harten Stoß auf den Rahmen 1 kommt, der Über diesen auf die Struktur des Flugzeuges übertragen würde und hier zu Beschädigungen führen könnte. Durch die Auswahl von Federn mit entsprechenden Federkonstanten kann dabei die Dämpfungscharakteristik der Anordnung gezielt verändert und somit den unterschiedlichen Erfordernissen angepaßt werden.

## Patentansprüche

1. Frachtladesystem für Luftfahrzeuge, insbesondere Oberdeck-Frachtladesystem für vom Passagier auf den Frachtbetrieb umrüstbare Verkehrsflugzeuge, mit in Flugzeuglängsrichtung im Flugzeugboden verlaufenden Sitzschienen und mindestens einem daran lösbar befestigten Riegelelement, bei dem wenigstens ein Riegelhaken schwenkbar und längsverschieblich in einem Rahmen gehaltert ist, der über Verriegelungselemente in zwei im Abstand voneinander befindlichen Sitzschienen festlegbar ist, dadurch gekennzeichnet, daß der Riegelhaken (2) in einem von zwei Stegen (10,11) gebildeten Hilfsrahmen gelagert ist, der sich seinerseits über horizontal angeordnete Federelemente (12,13) am Rahmen (1) abstützt.

2. Frachtladesystem nach Anspruch 1, dadurch gekennzeichnet, daß die Federelemente (12, 13) als Tellerfedern ausgebildet sind.

3. Frachtladesystem nach Anspruch 1, dadurch gekennzeichnet, daß die Federelemente (12, 13) als Blattfedern ausgebildet sind.

4. Frachtladesystem nach Anspruch 2 oder 3, dadurch gekennzeichnet, daß die Federelemente (12, 13) aus einzelnen Federpaketen zusammengesetzt sind.

## Claims

1. Cargo loading system for aircraft, in particular an upper-deck cargo loading system for commercial aircraft which are convertible from passenger to cargo service, having seat rails, which extend in the aircraft floor in a longitudinal direction of the aircraft and to which is detachably fastened at least one catch element, in which at least one catch hook is held in a pivotable and longitudinally displaceable manner in a frame, which is fixable by means of locking elements in two spaced-apart seat rails, characterized in that the catch hook (2) is supported in an auxiliary frame, which is formed by two webs (10, 11) and is in turn supported by means of horizontally disposed spring elements (12, 13) on the frame (1).

2. Cargo loading system according to claim 1, characterized in that the spring elements (12, 13) take the form of cup springs.

3. Cargo loading system according to claim 1, characterized in that the spring elements (12, 13) take the form of leaf springs.

4. Cargo loading system according to claim 2 or 3, characterized in that the spring elements (12, 13) are composed of individual spring assemblies.

## Revendications

1. Système de chargement de fret pour avions, plus particulièrement système de chargement de fret de pont supérieur, destiné à des avions de ligne pouvant être adaptés du transport de passagers au transport de fret, ledit système comprenant dans la direction longitudinale de l'avion des rails d'appui suivant le plancher de l'avion ainsi qu'au moins un élément de verrouillage fixé sur ceux-ci de manière amovible et pourvu d'au moins un crochet de verrouillage qui est maintenu pivotant et coulissant dans le sens longitudinal dans un châssis pouvant être fixé par l'intermédiaire d'éléments de verrouillage dans deux rails d'appui disposés à une certaine distance l'un de l'autre, système de chargement de fret **caractérisé en ce que** le crochet de verrouillage (2) est disposé dans un châssis secondaire formé de deux barrettes (10, 11) et s'appuyant pour sa part sur le châssis (1) par l'intermédiaire d'éléments de ressort (12, 13) disposés horizontalement.

2. Système de chargement de fret selon la revendication 1, caractérisé en ce que les éléments de ressort (12, 13) sont conçus comme des rondelles Belleville.

3. Système de chargement de fret selon la revendication 1, caractérisé en ce que les éléments de ressort (12, 13) sont conçus comme des ressorts à lames.

4. Système de chargement de fret selon l'une ou l'autre des revendications 2 et 3, caractérisé en ce que les éléments de ressort (12, 13) sont composés de différents ensembles de ressorts.
